# EUROPEAN PATENT SPECIFICATION

(11) **EP 2 129 816 B1**
(45) Date of publication and mention of the grant of the patent: **21.12.2016**
(21) Application number: 08727205.0
(22) Date of filing: 27.03.2008
(51) Int. Cl.: D01D 5/18, D01D 5/00, D01D 5/098, D01F 6/04

(54) **PRODUCTION OF NANOFIBERS BY MELT SPINNING**
HERSTELLUNG VON NANOFASERN DURCH SCHMELZSPINNEN
PRODUCTION DE NANOFIBRES GRÂCE À UN FILAGE PAR FUSION

(30) Priority: 29.03.2007 US 921135 P
(43) Date of publication of application: 09.12.2009
(60) Divisional application: 12181094.9
(73) Proprietor: E. I. du Pont de Nemours and Company, Wilmington, DE 19805 (US)
(72) Inventor: HUANG, Tao, Downingtown, Pennsylvania 19335 (US); MARSHALL, Larry, R., Chesterfield, Virginia 23838 (US); ARMANTROUT, Jack, Eugene, Richmond, Virginia 23235 (US); YEMBRICK, Scott, Wilmington, Delaware 19805 (US); DUNN, William, H., Wilmington, Delaware 19804 (US); O'CONNOR, James, M., Claymont, Delaware 19703 (US); MUELLER, Tim, Wilmington, Delaware 19808 (US); AVGOUSTI, Marios, Kennett Square, Pennsylvania 19348 (US); WETZEL, Mark, David, Newark, Delaware 19711 (US)
(74) Representative: Heinemann, Monica
(86) International application number: PCT/US2008/004081
(87) International publication number: WO 2008/121338

(56) References cited:
- US-A- 3 097 085
- US-A- 3 231 639
- US-B1- 6 524 514
- US-B2- 6 752 609
- WARD G F: "Meltblown nanofibres for nonwoven filtration applications" FILTRATION AND SEPARATION, ELSEVIER ADVANCED TECHNOLOGY, OXFORD, GB, vol. 38, no. 9, 1 November 2001 (2001-11-01), pages 42-43, XP004332342 ISSN: 0015-1882

## Description

### BACKGROUND OF THE INVENTION

### Field of the Invention

This invention relates to a melt spinning process for forming fibers and fibrous webs. In particular, very fine fibers can be made and collected into a fibrous web useful for selective barrier end uses such as in the fields of air and liquid filtration, flame retardancy, biomedical, battery and capacitor separators, biofuel membranes, cosmetic facial masks, biomedical applications, such as, hemostasis, wound dressings and healing, vascular grafts, tissue scaffolds, synthetic ECM (extra cellular matrix), and sensing applications, electronic/optical textiles, EMI Shielding, and antichembio protective coatings.

### Background

Centrifugal atomization processes are known in the art for making metal, metal alloy and ceramics powers. Centrifugal spinning processes are known in the art for making polymer fibers, carbon pitch fibers and glass fibers, such as disclosed in U.S. Patent Nos. 3,097,085 and 2,587,710. In such processes, the centrifugal force supplied by a rotational disc or distribution disc produces enough shear to cause the material to become atomized or to form fibers. However, centrifugal spinning has only been successfully used for the production of fibers with diameters larger than micron size.

There is a growing need for very fine fibers and fibrous webs made from very fine fibers. These types of webs are useful for selective barrier end uses. Presently very fine fibers are made from melt spun "islands in the sea" cross section fibers, split films, some meltblown processes, and electrospinning. However, these processes are generally limited to making non-commercial quantities of nanofibers because of their very low throughput.

In order to successfully produce nano- or sub-micrometer diameter fibers by melt-spinning, drawing of the polymer must occur as a result of either mechanical or electrostatic forces acting on the melt jet at the spinneret. However, it is very difficult to generate the forces needed to create a reduction in diameter to the nanometer level. Melt-electrospinning has been conducted in some universities since the later 1970s, but there was no success reported in making nanofibers, especially from polyolefins, such as polyethylene (PE) and polypropylene (PP).

A melt spinning apparatus in which a rotating disc spreads a polymer film onto the inside of a bell-shaped housing with ribs that form thin polymer fibers is also disclosed in U.S. Patent No. 6,752,609.

Electrospinning and electroblowing are processes for forming fibers with sub-micron scale diameters from polymer solutions through the action of electrostatic forces and/or shear force. The fibers collected as nonwoven mats have some useful properties such as high surface area-to-mass ratio, and thus have great potential in filtration, biomedical applications (such as, wound dressings, vascular grafts, tissue scaffolds), and sensing applications.

However, a vast majority of nanofibrous structures are produced by solvent based spinning processes. Chemicals used as solvents to dissolve many of the polymers being spun may leave residuals that are not compatible within the industry. With the intent of cleaner processing, environmental safety, and productivity, there is a persistent desire to produce fibers by melt spinning.

Spinning nanofibers directly from polymer melts would offer several advantages over solution based spinning: elimination of solvents and their concomitant recycling requirements, higher throughput, and spinning of polymers with low solvent solubility. Likewise, multi-component systems such as blends and composites would be more readily melt spun, because in many cases there is no common solvent for such blends. Finally, productivity would increase 10-500 fold and costs would drop significantly due to elimination of solvent recovery.

What is needed is a high throughput, cost effective and energy efficient process to melt spin nanofiber fibers and uniform fibrous webs.

### SUMMARY OF THE INVENTION

In one embodiment, the present invention is directed to a nanofiber forming process comprising the steps of:
supplying a spinning melt of at least one thermoplastic polyolefin to an inner spinning surface of a heated rotating distribution disc having a forward surface fiber discharge edge;
issuing the spinning melt along said inner spinning surface so as to distribute the spinning melt into a thin film and toward the forward surface fiber discharge edge;
wherein an additional stationary disc is located downstream of the rotating distribution disc and the polymer melt is issued through a gap between the rotating distribution disc and the stationary disc, wherein the shear applied to the polymer melt causes shear thinning; and
discharging separate molten polymer fibrous streams from the forward surface discharge edge to attenuate the fibrous streams to produce polymeric nanofibers that have mean fiber diameters of less than about 1,000 nm;
wherein the rotational speed of the rotating distribution disc is between 5,000 rpm and 100,000 rpm;
wherein the spinning melt has a viscosity from 1,000 cP to 100,000 cP; and
wherein the molten polymer fibrous streams discharged from the forward surface discharge edge are directed into a hot blowing gas stream and away from the rotating distribution disc, wherein the blowing gas has a temperature at or above the melting point of the polymer.

A second embodiment of the present invention is a melt spinning apparatus for making polymeric nanofibers, comprising:
a molten polymer supply tube having an inlet portion and an outlet portion and at least one molten polymer outlet nozzle at the outlet portion thereof, said supply tube positioned axially through said melt spinning apparatus;
a spinneret comprising a rotatable molten polymer distribution disc, having an inner spinning surface inlet portion surrounding and in fluid communication with said outlet portion of said molten polymer supply tube, and a forward surface discharge edge portion;
a stationary shear disc, disposed annular to said outlet portion of said molten polymer supply tube and parallel to and separated by a gap from the surface of the rotatable molten polymer distribution disc;
an indirect heating source directed at said rotatable molten polymer distribution disc; and
an annular hot blowing gas ring having blowing gas nozzles disposed on the circumference thereof, said blowing gas ring disposed annular to said molten polymer supply tube, with said blowing gas nozzles positioned to direct hot blowing gas over said forward surface fiber discharge edge.

### DETAILED DESCRIPTION OF THE INVENTION

In classical centrifugal fiber spinning processes, there are two types of spinnerets. Capillary-based spinning uses a rotor with side nozzle holes. A polymer melt is pushed out through the side nozzle holes, and large diameter fibers are formed by centrifugal stretching, such as disclosed in U.S. Patent No. 4,937,020. Capillary-based classical centrifugal spinning is not related to the case of the present invention. Another is film splitting-based spinning using a conical disc as rotor, such as disclosed in U.S. Patent No. 2,433,000. A polymer melt or solution is issued either directly onto a conical disc surface, or through nozzle holes at the bottom of the distribution disc. Film splitting-based classical centrifugal spinning is more closely related to the present invention.

In the case of film splitting-based classical centrifugal spinning, large diameter fibers are formed from the splitting of a discrete thick melt film or non-uniform thick melt film with a thickness of about 3 to 4 mil. No nanofiber formation has been reported using this classical centrifugal fiber spinning process.

In contrast, according to the present invention, nanofibers are formed by film splitting at the forward discharge edge of a rotating distribution disc, such as a bell cup; from a fully spread thin melt film on the inner surface of the distribution disc, with a typical film thickness in the low micron range.

In the case of film splitting in classical centrifugal spinning, the polymer viscosity is relatively higher than in the case of the present invention. The higher the viscosity, the larger the fibers which are formed. In the present invention, if the polymer is of sufficiently low melt viscosity, the spinning melt can be spun into nanofibers without any rheology modification. Alternatively, in order to assist the spinning of a very high viscosity melt, the spinning polymer can be plasticized, hydrolyzed or otherwise cracked to lower the viscosity. Generally, a spinning melt with a viscosity between about 1,000 cP to about 100,000 cP is useful, even a viscosity between about 1,000 cP to about 50,000 cP.

In the present invention, there is an additional stationary or "shear" disc placed downstream of the rotating distribution disc, and the polymer melt is issued through a gap between the rotating distribution disc and the shear disc, wherein the shear applied to the polymer melt causes shear thinning. The shear disc also acts as a melt distribution disc, helping to form a more uniform, fully spread, thin melt film on the inner surface of the rotating polymer distribution disc.

According to the present invention, the spinning melt comprises at least one thermoplastic polyolefin, such as polyethylene polymers and copolymers, polypropylene polymers and copolymers; and combinations thereof.

In the nanofiber melt spinning and web collection unit according to the present invention a rotating spinneret contains a rotating distribution disc suitable for forming fibers from the spinning melt. The distribution disc can have a concave or flat open inner spinning surface and is connected to a high speed motor by a drive shaft. By "concave" we mean that the inner surface of the disc can be curved in cross-section, such as hemispherical, have the cross-section of an ellipse, a hyperbola, a parabola or can be frustoconical, or the like. The melt spinning unit includes a stationary shear disc mounted substantially parallel to the polymer distribution disc's inner surface. A spinning melt is issued along the distribution disc's inner surface, and through a gap between the distribution disc inner surface and the shear disc so as to help distribute a sheared spinning polymer melt toward the forward surface of the discharge edge of the distribution disc. The distribution disc and shear disc are heated by an indirect, non-contact heating device, such as an infrared source, induction heating device or other such radiational heating source, to a temperature at or above the melting point of the polymer. The spinning melt is pumped from an inlet portion of a supply tube, running axially through the shear disc, toward the distribution disc and exits the supply tube at an outlet portion thereof. The throughput rate of the melt can be between about 0.1 cc/min to about 200 cc/min, even between about 0.1 cc/min to about 500 cc/min.

As the spinning melt enters the gap between the distribution disc inner surface and stationary shear disc, it is directed into contact with the distribution disc inner surface, the polymer melt fully spreads and wets the distribution disc's inner surface, and a thin film of low micron-thickness forms and flows along the distribution disc's inner surface until it reaches the distribution disc's forward surface discharge edge. The rotational speed of distribution disc is controlled to between about 5,000 rpm and about 100,000 rpm, or even between about 10,000 rpm and about 50,000 rpm. At the forward surface fiber discharge edge of the rotating distribution disc, the thin film splits into melt ligaments, the melt ligaments are further stretched by centrifugal force, and fibers are produced from the ligaments stretching.

One or more hot gas (e.g. air or N₂) rings, having hot gas nozzles disposed on the circumference thereof, are positioned annular to the rotating distribution disc and/or the molten polymer supply tube, the nozzles being positioned so as to direct a hot gas flow toward the molten polymer ligaments, to maintain the temperature of the film splitting and ligament stretching regions above the melting point of the polymer, to maintain the ligaments in the melt state and enable further stretching into nanofibers. The hot gas flow can also act to guide the fibers toward the web collector.

Optionally, there can be one or more cooling gas (e.g. air or N₂) nozzles, or cooling gas rings having cooling gas nozzles disposed on the circumference thereof, positioned annular to the heating gas ring(s), to direct cooling gas flow into the fiber formation region to rapidly quench and solidify the nanofibers before they reach the web collector. The cooling gas flow further guides the nanofiber stream toward the web collector.

Web collection can be enhanced by applying vacuum through the collector to pull the fibers onto the collector. The web collection ring may be a screen ring which is cooled, electrically grounded and connected to a blower to form a vacuum collector ring. The web collector can be cooled with flowing cold water or dry ice. A tubular web collecting screen is positioned inside the web collection ring, and is moved vertically along the web collection ring in order to form a uniform nanofibrous web. A nonwoven web or other such fibrous scrim can be situated on the tubular web collecting screen, onto which the nanofibers can be deposited.

Optionally, an electrostatic charge voltage potential can be applied and maintained in the spinning space between the distribution disc and the collector to improve the uniformity of the fibrous web laydown. The electrostatic charge can be applied by any known in the art high voltage charging device. The electrical leads from the charging device can be attached to the rotating spinneret and the collector, or if an electrode is disposed within the spinning space, to the spinneret and the electrode, or to the electrode and the collector. The voltage potential applied to the spinning unit can be in the range between about 1 kV and about 150 kV.

The designed temperature distribution surrounding the rotating distribution disc is an important distinguishing characteristic of the present invention process from classical centrifugal spinning.

Thus if T1 is the temperature of melt spinning zone around the rotating distribution disc, T2 is the temperature of melt threads (ligaments) stretching zone, and T3 is the temperature of rapid quenching and nanofiber solidifying zone, then T1 >T2> Tm (the melting point of polymer) and T3<< Tm, i.e. well below the melting point of the polymer.

The distribution disc geometry, especially the diameter D and angle α of the distribution disc, can influence the formation of fibers and fiber size. Diameter D of the present distribution disc is between about 10 mm and 200 mm, the angle α of the forward surface discharge edge is 0 degrees when the disc is flat, or between greater than 0 degrees to about 90 degrees, and the edge of the distribution disc is optionally serrated in order to form the fully spread thin film on the inner surface of the distribution disc. The serration on the distribution disc edge also helps to form the more uniform nanofibers with relatively narrow fiber diameter distribution.

The present process can make very fine fibers, preferably continuous fibers, with a mean fiber diameter of less than about 1,000 nm and even between about 100 nm to about 500 nm. The fibers can be collected onto a fibrous web or scrim. The collector can be conductive for creating an electrical field between it and the rotary spinneret or an electrode disposed downstream of the spinneret. The collector can also be porous to allow the use of a vacuum device to pull the hot and/or cooling gases away from the fibers and help pin the fibers to the collector to make the fibrous web. A scrim material can be placed on the collector to collect the fiber directly onto the scrim thereby making a composite material. For example, a nonwoven web or other porous scrim material, such as a spunbond web, a melt blown web, a carded web or the like, can be placed on the collector and the fiber deposited onto the nonwoven web or scrim. In this way composite fabrics can be produced.

Surprisingly, the process and apparatus of the present invention have been demonstrated to successfully melt spin polyolefin nanofibers, in particular polypropylene and polyethylene nanofibers. The fiber size (diameter) distributions of said polyolefin nanofibers are believed to be significantly lower than heretofore known in the art polyolefin fibers. For example, U.S. Patent No. 4,937,020 discloses a radial spinning process which, while suggesting the production of sub-micron polyolefin fibers having diameters as low as 0.1 micron, exemplifies only PP fibers having diameters of 1.1 micron. In contrast, according to the present invention, collections of polyolefin nanofibers having a mean fiber diameter of less than about 500 nm have been obtained, even less than or equal to about 400 nm, and the median of the fiber diameter distributions can be less than or equal to about 400 nm, or even less than 360 nm.

As can be seen from the Examples below, these low median fiber diameters demonstrate that in most cases the majority of polyolefin nanofibers collected are below the mean (number average) fiber diameters.

### TEST METHODS

In the description above and in the non-limiting examples that follow, the following test methods were employed to determine various reported characteristics and properties.

Fiber Diameter was determined as follows. Ten scanning electron microscope (SEM) images at 5,000x magnification were taken of each nanofiber layer sample. The diameter of more than 200, or even more than 300 clearly distinguishable nanofibers were measured from the SEM images and recorded. Defects were not included (i.e., lumps of nanofibers, polymer drops, intersections of nanofibers). The average fiber diameter for each sample was calculated and reported in nanometers (nm).

### EXAMPLES

Hereinafter the present invention will be described in more detail in the following examples.

### Example 1

Continuous fibers were made from an ultra-high melt flow rate polypropylene homopolymer, with a very narrow molecular weight distribution (Metocene MF650Y, from Basell USA Inc., density of 0.91 g/cc at 23 °C measured using ASTM D 792, MFR = 1800 gram/10 min. measured using ASTM D1238). The typical shear viscosity of Metocene MF650Y PP is 4.89181 Pa-sec. at the shear rate of 10,000/sec. at 204 °C (400 °F).

The melting point of Metocene MF650Y PP is Tm>160 °C.

A PRISM extruder with a gear pump was used to deliver the polymer melt to the rotating spinneret through the supply tube. The pressure was set to a constant 61 psi (420 kPa). The gear pump speed was set to a constant set point 5 and this produced a melt feed rate of about 0.8 cc/min. The hot blowing air was set at a constant 30 psi (207 kPa). The rotating polymer melt distribution disc had a concave angle of 30 degrees, without a serrated discharge edge and in the absence of a shear disc. The rotation speed of the distribution disc was set to a constant 11,000 rpm. The temperature of the spinning melt from the melt supply tube was set to 251 °C, the temperature of the distribution disc was set to 260 °C and the temperature of the blowing air was set to 220 °C. No electrical field was used during this test.

Nanofibers were collected on a Reemay nonwoven collection screen that was held in place 15 inches (38 cm) away from the distribution disc by stainless steel sheet metal. The fiber size was measured from an image using scanning electron microscopy (SEM) and determined to be in the range of 99 nm to 1188 nm, with an average fiber diameter of about mean = 430 nm and median = 381 nm from the measurement of 366 fibers.

### Example 2

Example 2 was prepared similarly to Example 1, except the rotation speed of the distribution disc was set to a constant 13,630 rpm. The diameters of fibers became smaller than Example 1. The fiber size was measured from an image using SEM and determined to be in the range of 40 nm to 1096 nm, with an average fiber diameter of about mean = 363 nm and median = 323 nm from the measurement of 422 fibers.

### Example 3

Continuous fibers were made according to Example 1, except using a different PP homopolymer (Metocene MF650X, from Basell USA Inc., an ultra-high melt flow rate resin with very narrow molecular weight distribution, density of 0.91 g/cc at 23 °C measured using ASTM D 792, MFR = 1200 gram/10 min. measured using ASTM D1238). The typical shear viscosity of Metocene MF650Y PP is 5.76843 Pa-sec. at the shear rate of 10,000/sec. at 204 °C (400 °F). The melting point of Metocene MF650Y PP is Tm>160 °C.

The distribution disc had a concave angle of 15 degrees, without a serrated discharge edge and in the presence of a stationary shear disc. The rotation speed of the distribution disc was set to a constant 11,000 rpm. The temperature of the spinning melt from the melt supply tube was set to 251 °C, the temperature of the distribution disc was set to 270 °C and the temperature of the blowing air was set to 220 °C. No electrical field was used during this test.

Fibers were collected on a Reemay nonwoven collection screen that was held in place 15 inches (38 cm) away from the rotary spinning disc by stainless steel sheet metal. The fiber size was measured from an image using scanning electron microscopy (SEM) and determined to be in the range of 63 nm to 1400 nm, with an average fiber diameter of about mean = 378 nm and median = 313 nm from the measurement of 727 fibers.

### Example 4

Continuous fibers were made according to Example 1, except using a different PP homopolymer (Metocene MF650W, from Basell USA Inc., a high melt flow rate resin with very narrow molecular weight distribution, density of 0.91 g/cc at 23 °C measured using ASTM D 792, MFR = 500 gram/10 min. measured using ASTM D1238). The typical shear viscosity of Metocene MF650Y PP is 9.45317 Pa-sec. at the shear rate of 10,000/sec. at 204 °C (400 °F). The melting point of Metocene MF650Y PP is Tm>160 °C.

The distribution disc had a concave angle of 30 degrees, without a serrated discharge edge and in the absence of shear disc. The rotation speed of the distribution disc was set to a constant 11,000 rpm. The temperature of the spinning melt from melt supply tube was set to 251 °C, the temperature of the distribution disc was set to 260 °C and the temperature of the blowing air was set to 220 °C. No electrical field was used during this test.

Fibers were collected on a Reemay nonwoven collection screen that was held in place 15 inches (38 cm) away from the distribution disc by stainless steel sheet metal. The fiber size was measured from an image using scanning electron microscopy (SEM) and determined to be in the range of 60 nm to 1650 nm, with an average fiber diameter of about mean = 480 nm and median = 400 nm from the measurement of 209 fibers.

### Example 5

Continuous fibers were made according to Example 1, except using a polyethylene (LLDPE) injection molding resin (SURPASS® IFs932-R from NOVA Chemicals, Canada), a high melt index resin with very narrow molecular weight distribution. The properties of this polymer were: density of 0.932 g/cc at 23 °C measured using ASTM D 792, MI = 150 gram/10 min. measured using ASTM D1238.

A PRISM extruder with a gear pump is used for deliver melt to the distribution disc through the supply tube. The pressure was set to a constant 61 psi (420 kPa). The gear pump speed was set to a constant 10 and this produced a melt feed rate of about 1.6 cc/min. The hot blowing air was set at a constant 30 psi (207 kPa). The rotary spinning disc had a concave angle of 30 degrees, with serrated discharge edge and in presence of a stationary shear disc. The rotation speed of the distribution disc was set to a constant 13,630 rpm. The temperature of the spinning melt from the melt supply tube was set to 250 °C, the temperature of the rotary spinning disc was set to 220 °C and the temperature of the blowing air was set to 160 °C. No electrical field was used during this test.

Fibers were collected on a Reemay nonwoven collection screen that was held in place 15 inches (38 cm) away from the distribution disc by stainless steel sheet metal. The fiber size was measured from an image using scanning electron microscopy (SEM) and determined to be in the range of 53 nm to 1732 nm, with an average fiber diameter of about mean = 409 nm and median = 357 nm from the measurement of 653 fibers.

## Claims

1. A nanofiber forming process comprising the steps of:
supplying a spinning melt of at least one thermoplastic polyolefin to an inner spinning surface of a heated rotating distribution disc having a forward surface fiber discharge edge;
issuing the spinning melt along said inner spinning surface so as to distribute the spinning melt into a thin film and toward the forward surface fiber discharge edge;
wherein an additional stationary disc is located downstream of the rotating distribution disc and the polymer melt is issued through a gap between the rotating distribution disc and the stationary disc, wherein the shear applied to the polymer melt causes shear thinning; and
discharging separate molten polymer fibrous streams from the forward surface discharge edge to attenuate the fibrous streams to produce polymeric nanofibers that have mean fiber diameters of less than about 1,000 nm;
wherein the rotational speed of the rotating distribution disc is between 5,000 rpm and 100,000 rpm;
wherein the spinning melt has a viscosity from 1,000 cP to 100,000 cP; and
wherein the molten polymer fibrous streams discharged from the forward surface discharge edge are directed into a hot blowing gas stream and away from the rotating distribution disc, wherein the blowing gas has a temperature at or above the melting point of the polymer.

2. The process of claim 1, which forms nanofibers having a mean fiber diameter less than 500 nm.

3. The process of claim 1, further comprising collecting the fibers onto a collector to form a fibrous web.

4. The process of claim 3, wherein a voltage potential is maintained between the rotating distribution disc and the collector.

5. The process of claim 4, wherein the voltage potential is maintained between the rotating distribution disc and an electrode positioned between the rotating distribution disc and the collector.

6. The process of claim 4, wherein the voltage potential is maintained between the collector and an electrode positioned between the rotating distribution disc and the collector.

7. The process of claim 4, wherein the voltage potential is between 1 kV to 150 kV.

8. A melt spinning apparatus for making polymeric nanofibers, comprising:
a molten polymer supply tube having an inlet portion and an outlet portion and at least one molten polymer outlet nozzle at the outlet portion thereof, said supply tube positioned axially through said melt spinning apparatus;
a spinneret comprising a rotatable molten polymer distribution disc, having an inner spinning surface inlet portion surrounding and in fluid communication with said outlet portion of said molten polymer supply tube, and a forward surface discharge edge portion;
a stationary shear disc, disposed annular to said outlet portion of said molten polymer supply tube and parallel to and separated by a gap from the surface of the rotatable molten polymer distribution disc;
an indirect heating source directed at said rotatable molten polymer distribution disc; and
an annular hot blowing gas ring having blowing gas nozzles disposed on the circumference thereof, said blowing gas ring disposed annular to said molten polymer supply tube, with said blowing gas nozzles positioned to direct hot blowing gas over said forward surface fiber discharge edge.

9. The melt spinning apparatus of claim 8, further comprising a porous collection surface downstream of said forward surface discharge edge.

10. The melt spinning apparatus of claim 8, wherein the forward surface discharge edge is serrated.

11. The melt spinning apparatus of claim 9, further comprising a high voltage charging device connected between said molten polymer distribution disc and said collection surface.

## Patentansprüche

1. Nanofaserbildungsverfahren umfassend die Schritte des:
Anlieferns einer Spinnschmelze aus mindestens einem Thermoplastpolyolefin an eine innere Spinnfläche einer erhitzten rotierenden Verteilungsscheibe, die eine Vorderflächen-Faserabgabekante aufweist;
Ausgebens der Spinnschmelze entlang der inneren Spinnfläche, um die Spinnschmelze zu einem dünnen Film und auf die Vorderflächen-Faserabgabekante zu zu verteilen;
wobei eine zusätzliche unbewegliche Scheibe stromabwärts von der rotierenden Verteilungsscheibe positioniert ist und die Polymerschmelze durch einen Spalt zwischen der rotierenden Verteilungsscheibe und der unbeweglichen Scheibe ausgegeben wird, wobei die auf die Polymerschmelze aufgebrachte Scherung Scherverdünnung verursacht; und
Abgebens getrennter faserförmiger Ströme von geschmolzenem Polymer von der Vorderflächen-Abgabekante, um die faserförmigen Ströme zu verdünnen, um polymere Nanofasern herzustellen, die mittlere Faserdurchmesser von weniger als etwa 1.000 nm aufweisen;
wobei die Rotationsgeschwindigkeit der rotierenden Verteilungsscheibe 5.000 UpM bis 100.000 UpM beträgt;
wobei die Spinnschmelze eine Viskosität von 1.000 cP bis 100.000 cP aufweist; und
wobei die faserförmigen Ströme von geschmolzenem Polymer, die von der Vorderflächen-Abgabekante abgegeben werden, in einen heiß blasenden Gasstrom und von der rotierenden Verteilungsscheibe hinweg gerichtet werden, wobei das blasende Gas eine Temperatur von oder über dem Schmelzpunkt des Polymers aufweist.

2. Verfahren nach Anspruch 1, das Nanofasern bildet, die einen mittleren Faserdurchmesser von weniger als 500 nm aufweisen.

3. Verfahren nach Anspruch 1, ferner das Auffangen der Fasern auf einem Sammler umfassend, um ein faserförmiges Netzwerk zu bilden.

4. Verfahren nach Anspruch 3, wobei ein Spannungspotential zwischen der rotierenden Verteilungsscheibe und dem Sammler beibehalten wird.

5. Verfahren nach Anspruch 4, wobei das Spannungspotential zwischen der rotierenden Verteilungsscheibe und einer zwischen der rotierenden Verteilungsscheibe und dem Sammler positionierten Elektrode beibehalten wird.

6. Verfahren nach Anspruch 4, wobei das Spannungspotential zwischen dem Sammler und einer zwischen der rotierenden Verteilungsscheibe und dem Sammler positionierten Elektrode beibehalten wird.

7. Verfahren nach Anspruch 4, wobei das Spannungspotential 1 kV bis 150 kV beträgt.

8. Schmelzspinnvorrichtung zum Herstellen polymerer Nanofasern, umfassend:
ein Anlieferrohr für geschmolzenes Polymer, das einen Einlassteil und einen Auslassteil und mindestens eine Auslassdüse für geschmolzenes Polymer am Auslassteil davon aufweist, wobei das Anlieferrohr axial durch die Schmelzspinnenvorrichtung positioniert ist;
eine Spinndüse, die eine rotierbare Verteilungsscheibe für geschmolzenes Polymer, die einen Einlassteil der inneren Spinnfläche aufweist, der den Auslassteil des Anlieferungsrohrs für geschmolzenes Polymer umgibt und in Fluidkommunikation damit steht, und einen Vorderflächen-Abgabekantenteil umfasst;
eine unbewegliche Scherscheibe, die ringförmig zum Auslassteil des Anlieferungsrohrs für geschmolzenes Polymer und parallel zu und getrennt durch einen Spalt von der Oberfläche der rotierbaren Verteilungsscheibe für geschmolzenes Polymer angeordnet ist;
eine indirekte Erhitzungsquelle, die auf die rotierbare Verteilungsscheibe für geschmolzenes Polymer gerichtet ist; und
einen ringförmigen heiß Blasgasring, der Blasgasdüsen aufweist, die am Umfang davon angeordnet sind, wobei der Blasgasring ringförmig um das Anlieferungsrohr für geschmolzenes Polymer angeordnet ist, wobei die Blasgasdüsen positioniert sind, um heiß blasendes Gas über die Vorderflächen-Faserabgabekante zu leiten.

9. Schmelzspinnvorrichtung nach Anspruch 8, ferner eine poröse Auffangfläche stromabwärts von der Vorderflächen-Abgabekante umfassend.

10. Schmelzspinnvorrichtung nach Anspruch 8, wobei die Vorderflächen-Abgabekante gezahnt ist.

11. Schmelzspinnvorrichtung nach Anspruch 9, ferner eine Hochspannungsaufladungsvorrichtung umfassend, die zwischen der Verteilungsscheibe für geschmolzenes Polymer und der Auffangfläche angeschlossen ist.

## Revendications

1. Procédé de formation de nanofibres comprenant les étapes de:
alimentation d'une masse fondue de filage d'au moins une polyoléfine thermoplastique au niveau d'une surface de filage interne d'un disque de distribution rotatif chauffé présentant un bord de décharge de fibres en surface avant;
sortie de la masse fondue de filage le long de ladite surface de filage interne afin de répartir la masse fondue de filage en un film fin et vers le bord de décharge de fibres en surface avant;
dans lequel un disque stationnaire additionnel est localisé en aval du disque de distribution rotatif et la masse fondue de polymère est délivrée à travers un espace entre le disque de distribution rotatif et le disque stationnaire, le cisaillement appliqué à la masse fondue de polymère entraîne la fluidification par cisaillement; et
la décharge de flux fibreux de polymère fondu séparés du bord de décharge en surface avant pour affiner les flux fibreux afin de produire des nanofibres polymères qui présentent des diamètres moyens de fibre inférieurs à environ 1 000 nm;
dans lequel la vitesse de rotation du disque de distribution rotatif est comprise entre 5 000 tr/min et 100 000 tr/min;
dans lequel la masse fondue de filage présente une viscosité de 1 000 cP à 100 000 cP; et
dans lequel les flux fibreux de polymère fondu déchargés du bord de décharge en surface avant sont dirigés dans un écoulement de gaz de soufflage à chaud et loin du disque de distribution rotatif, dans lequel le gaz de soufflage présente une température au niveau ou au-dessus du point de fusion du polymère.

2. Procédé selon la revendication 1, qui forme des nanofibres présentant un diamètre moyen de fibre inférieur à 500 nm.

3. Procédé selon la revendication 1, comprenant en outre le recueil des fibres sur un collecteur pour former un voile fibreux.

4. Procédé selon la revendication 3, dans lequel une tension-différence de potentiel est maintenue entre le disque de distribution rotatif et le collecteur.

5. Procédé selon la revendication 4,
dans lequel la tension-différence de potentiel est maintenue entre le disque de distribution rotatif et une électrode positionnée entre le disque de distribution rotatif et le collecteur.

6. Procédé selon la revendication 4, dans lequel la tension-différence de potentiel est maintenue entre le collecteur et une électrode positionnée entre le disque de distribution rotatif et le collecteur.

7. Procédé selon la revendication 4, dans lequel la tension-différence de potentiel est comprise entre 1 kV et 150 kV.

8. Appareil de filage de masse fondue pour fabriquer des nanofibres polymères, comprenant:
un tube d'alimentation de polymère fondu présentant une partie d'orifice d'entrée et une partie d'orifice de sortie et au moins une buse de sortie de polymère fondu au niveau de sa partie d'orifice de sortie, ledit tube d'alimentation étant positionné de manière axiale à travers ledit appareil de filage de masse fondue;
une filière comprenant un disque de distribution de polymère fondu pouvant tourner, présentant une partie d'orifice d'entrée de surface de filage interne entourant et en communication fluide avec ladite partie d'orifice de sortie dudit tube d'alimentation de polymère fondu, et une partie de bord de décharge en surface avant;
un disque de cisaillement stationnaire, disposé de manière annulaire par rapport à ladite partie d'orifice de sortie dudit tube d'alimentation de polymère fondu et parallèle et séparé par un espace de la surface du disque de distribution de polymère fondu pouvant tourner;
une source indirecte de chauffage dirigée au niveau dudit disque de distribution de polymère fondu pouvant tourner; et
une bague de gaz de soufflage chaud annulaire ayant des buses de gaz de soufflage disposées sur sa circonférence, ladite bague de gaz de soufflage étant disposée de manière annulaire par rapport audit tube d'alimentation de polymère fondu, avec lesdites buses de gaz de soufflage positionnées pour diriger du gaz de soufflage chaud par-dessus ledit bord de décharge de fibres en surface avant.

9. Appareil de filage à l'état fondu selon la revendication 8, comprenant en outre une surface de collecte poreuse en aval dudit bord de décharge en surface avant.

10. Appareil de filage à l'état fondu selon la revendication 8, dans lequel le bord de décharge en surface avant est dentelé.

11. Appareil de filage à l'état fondu selon la revendication 9, comprenant en outre un dispositif de charge à haute tension connecté entre ledit disque de distribution de polymère fondu et ladite surface de collecte.
